# EUROPEAN PATENT APPLICATION

(11) **EP 4 129 542 A1**
(43) Date of publication of application: **08.02.2023**
(21) Application number: 21197275.7
(22) Date of filing: 16.09.2021
(51) Int. Cl.: B23B 47/26, B23B 39/00

(54) **FEED CONTROL DEVICE FOR DRILL PRESS**

(30) Priority: 04.08.2021 TW 110209192 U
(71) Applicant: Taiwan Rong Fu Industrial Co., Ltd., Taichung City 40147 (TW)
(72) Inventor: LIN, Bin Chun, 40147 Taichung City (TW)
(74) Representative: Cabinet Chaillot

(57) **Abstract**

A feed control device for a drill press includes a case and a spindle unit extends perpendicularly through the case. The spindle unit includes a shank and a spindle which has a toothed portion formed to the outer periphery thereof. A depth detection unit is located beside the toothed portion. A driving unit is located at the rear end of the case and includes a motor and a belt which is connected between the motor and the shank. A feed unit includes a gear, a shaft and a feed handle. The shaft extends horizontally through the case and is perpendicular to the toothed portion. The feed handle is connected to the left end or the right end of the shaft of the feed unit so that right-handed or left-handed users can operate the feed handle. A control unit is electrically connected to the motor and the depth detection unit.

## Description

### BACKGROUND OF THE INVENTION

### 1. Fields of the invention

The present invention relates to a drill press, and more particularly, to a feed control device for a drill press and the feed handle can be installed to either side of the drill press.

### 2. Descriptions of Related Art

The conventional drill press is a commonly used machine for various types of mechanical processing plants. The drill press uses a motor to control the rotation speed of the drill bit, and personnel operates the drill bit to drill, ream or tap various metal and non-metal materials.

As shown in Fig. 8, CN 208178478U discloses a drill press 9 which includes a motor 91 to drive ta spindle unit 92, and the user operates a feed unit 93 to control the depth of the spindle unit 92 to drill holes through an object.

However, the drill press as mentioned above can only operate the feed unit 93 by the right hand, and this restricts the left-handed user to operate the feed unit 93. In addition, the feed unit 93 has to be rotated more than 180 degrees or multiple revolutions to control the needed feed depth. The feed unit 93 located at the right side of the drill press 9 obviously needs to be improved for left-handed users.

The present invention intends to provide a feed control device for a drill press to eliminate shortcomings mentioned above.

### SUMMARY OF THE INVENTION

The present invention relates to a feed control device for a drill press, and comprises a case, a spindle unit, a driving unit, a feed unit and a control unit. The spindle unit extends perpendicularly through the front end of the case and includes a shank and a spindle. The spindle includes a toothed portion formed to the outer periphery thereof. A depth detection unit is located beside the toothed portion. The driving unit is located at the rear end of the case and includes a motor and a belt. The belt is connected between the motor and the shank. The feed unit includes a gear, a shaft and a feed handle. The shaft extends horizontally through the case and is perpendicular to the toothed portion. The feed handle is connected to the left end or the right end of the shaft of the feed unit. The control unit is electrically connected to the motor and the depth detection unit. The right-handed or the left-handed users can operate the feed handle.

Preferably, the gear of the feed unit includes 55 teeth, a pitch diameter of 110 and a gear module of 2.

Preferably, the gear of the feed unit rotates an angle θ of 160 degrees from the initial position to complete a machining process of the spindle unit.

Preferably, the ratio of the angle θ of the feed handle of the spindle unit relative to the distance that the spindle unit moves is 1:0.83 to 1:0.93.

Preferably, the case includes a front cover and a displace panel is connected to the outside of the front cover. The front cover is connected to the case and the front end of the top cover. The control panel is electrically connected to the control unit.

Preferably, the control panel displays the speed of the motor, the load of the motor, and the speed of the spindle unit.

Preferably, the case includes a first room and a second room respective formed in the front end and the rear end of the case. The spindle unit and the feed unit are located in the first room, and the driving unit and the control unit are located in the second room.

Preferably, the shank of the spindle unit includes a keyway section at the distal end thereof. Multiple bearings are located around shank. The multiple bearings and the shank are located in the spindle.

Preferably, the driving unit includes an active wheel and a passive wheel. The belt is connected between the active wheel and the passive wheel. The active wheel is connected to the output shaft of the motor. The passive wheel includes a mount part which is connected to the keyway section of the shank of the spindle unit. The motor drives the active wheel so as to drive the passive wheel via the belt.

Preferably, the shaft of the feed unit includes the gear connected to the middle of the shaft, and the two ends of the shaft extend beyond the case.

The advantages of the present invention are that the gear of large diameter drives the spindle to move a longer distance to reduce the number of revolutions when operating the feed handle.

The two ends of the shaft of the spindle unit extend beyond the two sides of the case so that the feed handle can be installed to the left side or the right side of the drill press.

The control panel is electrically connected to the control unit and displays the speed of the motor, the load of the motor, and the speed of the spindle unit for clear reference to the users.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the drill press of the present invention;
Fig. 2 is an exploded view of the feed unit of the present invention;
Fig. 3 is a side view to show the drill press of the present invention;
Fig. 4 is a cross sectional view to show the feed unit of the present invention;
Fig. 5 is a cross sectional view to show spindle unit is lowered by the feed unit of the present invention;
Fig. 6 is a cross sectional view, taken along line X-X in Fig. 3;
Fig. 7 is an enlarged view of a portion of the disclosure of Fig. 6, and
Fig. 8 shows a conventional drill press.

### DETAILED DESCRIPTION OF THE PREFERRED EMBODIMENT

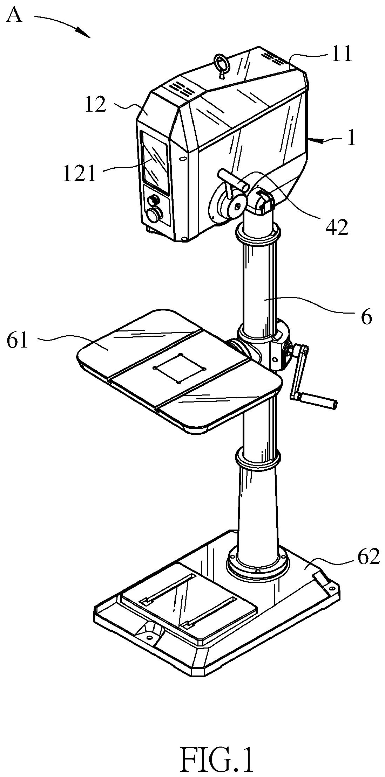

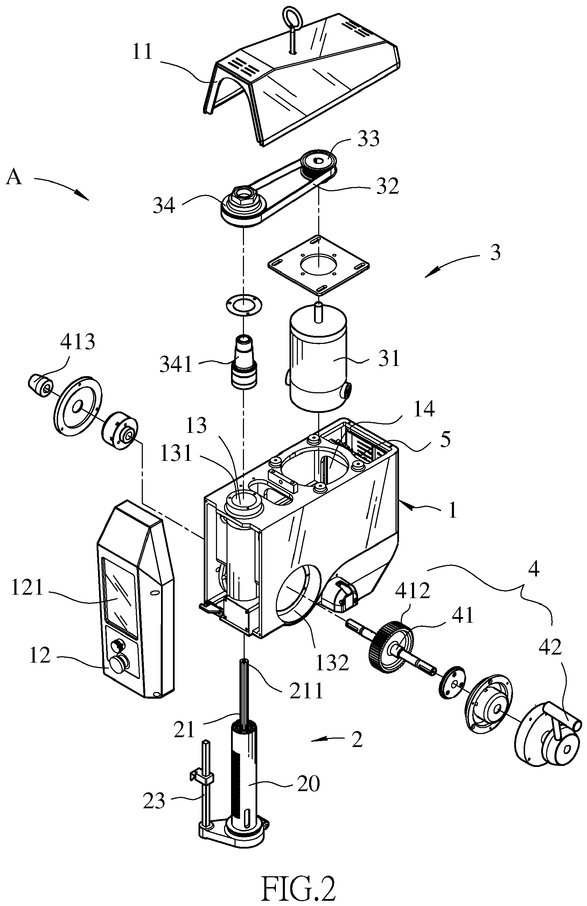

Referring to Figs. 1 and 2, the drill press "A" of the present invention comprises a case 1, a spindle unit 2, a driving unit 3, a feed unit 4 and a control unit 5.

The case 1 is assembled by multiple boards and includes a first path 131 defined in each other two sides of the case 1. A second path 132 communicates with the first path 131 in the case 1 so as to form a first room 13. The case 1 further includes a top cover 11 mounted to the top of the case 1, a front cover 12 and a control panel 121. The case 1 includes a first room 13 and a second room 14 respective formed in the front end and the rear end of the case 1. The displace panel 121 is connected to the outside of the front cover 12. The front cover 12 is connected to the case 1 and front end of the top cover 11.

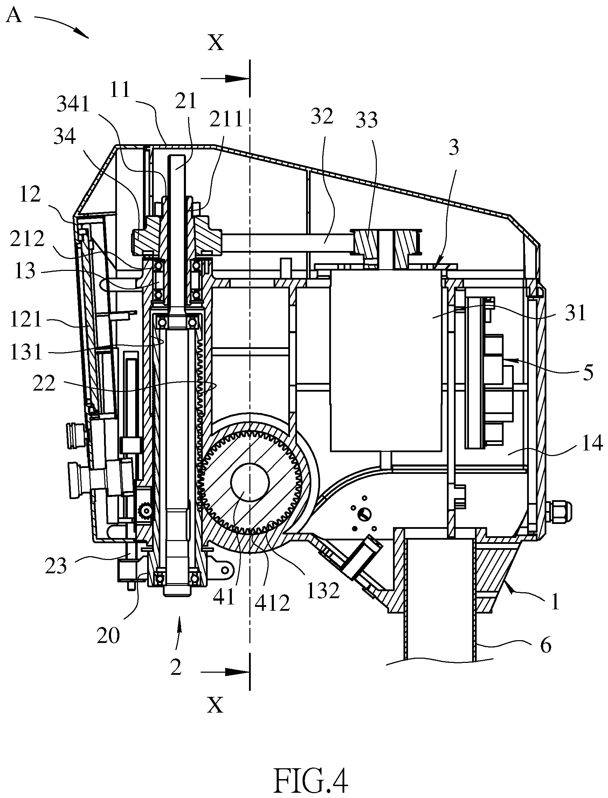

As shown in Fig. 4, the spindle unit 2 extends through the first room 13 via the second path 132, and includes a shank 21 and a spindle 20. The spindle 20 includes a toothed portion 22 formed to the outer periphery thereof. A depth detection unit 23 is located beside the toothed portion 22. The shank 21 of the spindle unit 2 includes a keyway section 211 at the distal end thereof. Multiple bearings 212 are located around shank 21, so that the multiple bearings 212 and the shank 21 are located in the spindle 20.

As shown in Figs. 2 and 4, the driving unit 3 is located at in the second room 14 at the rear end of the case 1 and includes a motor 31 and a belt 32. The belt 32 is connected between the motor 31 and the shank 21.

The driving unit 3 includes an active wheel 33 and a passive wheel 34. The belt 32 is connected between the active wheel 33 and the passive wheel 34. The active wheel 33 is connected to the output shaft of the motor 31. The passive wheel 34 includes a mount part 341 which is connected to the keyway section 211 of the shank 21 of the spindle unit 2. The motor 31 drives the active wheel 33 so as to drive the passive wheel 34 via the belt 32.

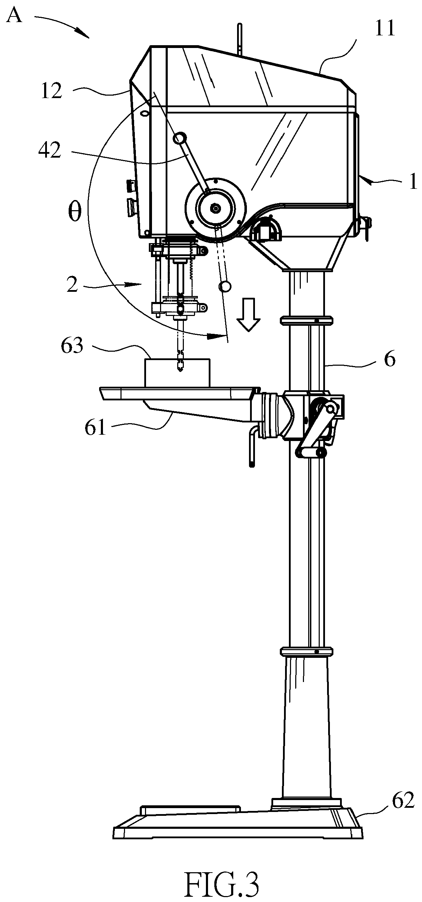

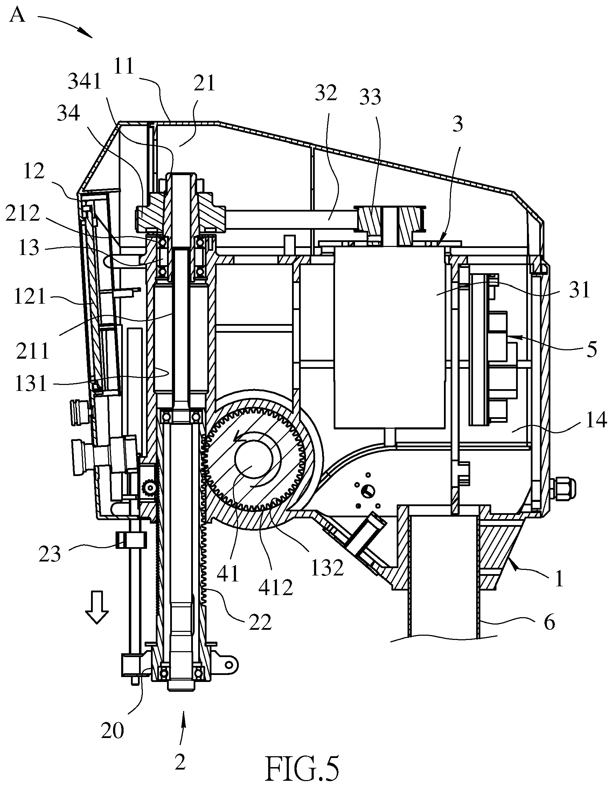

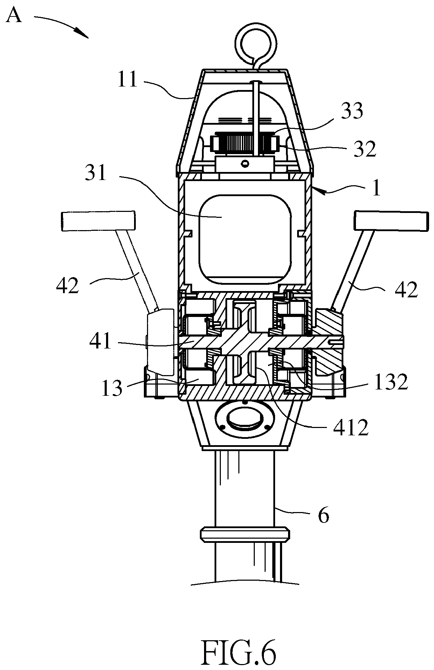

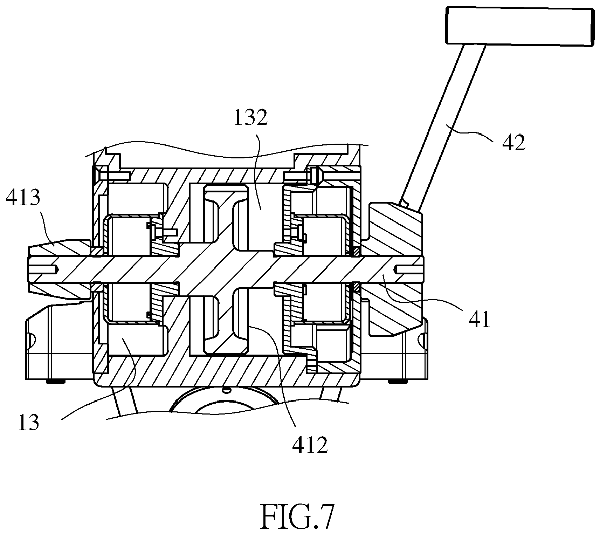

As shown in Figs. 5 to 7, the feed unit 4 including a gear 412, a shaft 41 and a feed handle 42. The shaft 41 extends horizontally through the case 1 and is perpendicular to the toothed portion 22. The shaft 41 of the feed unit 4 includes the gear 412 connected to the middle of the shaft 41, and the two ends of the shaft 41 extend beyond the case 1 via the first path 131. The feed handle 42 is connected to the left end or the right end of the shaft 41 of the feed unit 4. An end cap 413 is connected to one of the two ends of the shaft 41, and the feed handle 42 is connected to the other one of the two ends of the shaft 41. As shown in Fig. 3, the gear 412 of the feed unit 4 rotates a half revolution, preferably rotates an angle θ of 160 degrees, from an initial position to complete a machining process of the spindle unit 2.

As shown in Figs. 2 and 4, the control unit 5 is located in the second room 14 and beside the motor 31. The control unit 5 is electrically connected to the motor 31, the depth detection unit 23 and the control panel 121.

As shown in Figs. 1 and 3, the drill press "A" includes a column 6 connected to a base 62, and a table 61 is movably connected to the column 6.

As shown in Figs. 2, 3, 6 and 7, an object 63 is secured on the table 61, and a user installs the feed handle 42 to either one of the two ends of the shaft 41 according to the user's need.

As shown in Figs. 2, 4 and 5, the user then inputs the settings to the motor 31 from the control panel 121, and the depth detection unit 23 is activated to track the depth of the spindle unit 2. The control unit 5 activates the driving unit 3 so that the user can see the information from the control panel 121.

The motor 31 rotates the active wheel 33 which drives the passive wheel 34 via the belt 32, and the keyway section 211 of the shank 21 is rotated by the mount part 341, so that the shank 21 rotates smoothly by the bearings 212, while the spindle 20 is remained still.

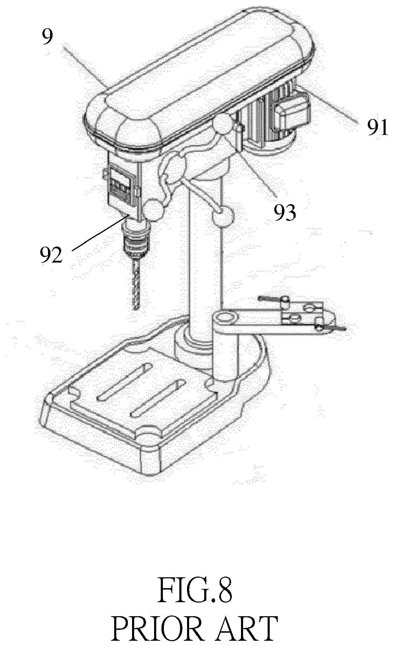

As shown in Figs. 3, 8 and the table 1, the gear module of the conventional drill press and the drill press "A" of the present invention is identical. The gear 412 of the feed unit 4 of the present invention includes 55 teeth, a pitch diameter of 110 and a gear module of 2. The ratio of the number of teeth of the gear of the conventional drill press and that of the drill press "A" of the present invention is about 1:2.208 to 1:2.375. With the same rotational angle, the distance that the spindle unit 2 moves is 2.208 to 2.375 times of the distance that the spindle unit of the conventional drill press. That is to say, the feed handle 42 is rotated less number of revolution to finish the machining process when comparted with conventional drill press. The ratio of the angle θ of the feed handle 42 of the spindle unit 4 relative to the distance that the spindle unit 4 moves is 1:0.83 to 1:0.93. Preferably, the ratio is 1: 0.93, that is to say, when the feed handle 42 rotates 1 degree, the spindle unit 2 moves 0.93 mm.

**Table 1**

| | Gear of conventional drill press | Gear of the claimed drill press |
|---|---|---|
| Gear moudle | 2 | 2 |
| No. of teeth | 24 | 55 |
| Pitch diameter | 48 | 110 |

As shown in Figs. 3 to 5, the user holds the feed handle 42 and rotates the feed handle 42 to drives the shaft 41 an angle. The shaft 41 is engaged with the toothed portion 22 of the spindle unit 2 so that the spindle unit 2 moves toward the object 63 to drill holes in the object 63 by the shank 21 with a desired depth. When the feed handle 42 is counter-rotated, the shank 21 moves upward and separates from the object 63 to finish the drilling process.

While we have shown and described the embodiment in accordance with the present invention, it should be clear to those skilled in the art that further embodiments may be made without departing from the scope of the present invention.

## Claims

1. A feed control device for a drill press, comprising:
a case (1) having a top cover (11) mounted to a top of the case (1);
a spindle unit (2) extending perpendicularly through a front end of the case (1) and including a shank (21) and a spindle (20), the spindle (20) including a toothed portion (22) formed to an outer periphery thereof, a depth detection unit (23) located beside the toothed portion (22);
a driving unit (3) located at a rear end of the case (1) and including a motor (31) and a belt (32), the belt (32) connected between the motor (31) and the shank (21);
a feed unit (4) including a gear (412), a shaft (41) and a feed handle(42), the shaft (41) extending horizontally through the case (1) and being perpendicular to the toothed portion, the feed handle (42) connected to a left end or a right end of the shaft (41) of the feed unit (4), and
a control unit (5) electrically connected to the motor (31) and the depth detection unit (23).

2. The feed control device for a drill press as claimed in claim 1, wherein the gear (412) of the feed unit (4) includes 55 teeth, a pitch diameter of 110 and a gear module of 2.

3. The feed control device for a drill press as claimed in claim 1, wherein the gear (412) of the feed unit (4) rotates an angle of 160 degrees from an initial position to complete a machining process of the spindle unit (2).

4. The feed control device for a drill press as claimed in claim 3, wherein a ratio of the angle of the feed handle (42) of the spindle unit (2) relative to a distance that the spindle unit (2) moves is 1:0.83 to 1:0.93.

5. The feed control device for a drill press as claimed in claim 1, wherein the case (1) includes a front cover (12) and a displace panel (121) which is connected to an outside of the front cover (12), the front cover (12) connected to the case (1) and a front end of the top cover (11), the control panel (121) is electrically connected to the control unit (5).

6. The feed control device for a drill press as claimed in claim 5, wherein the control panel (121) displays a speed of the motor (31), a load of the motor (31), and a speed of the spindle unit (2).

7. The feed control device for a drill press as claimed in claim 1, wherein the case (1) includes a first room (13) and a second room (14) respective formed in the front end and the rear end of the case (1), the spindle unit (2) and the feed unit (4) are located in the first room (13), the driving unit (3) and the control unit (5) are located in the second room (14).

8. The feed control device for a drill press as claimed in claim 1, wherein the shank (21) of the spindle unit (2) includes a keyway section (211) at a distal end thereof, multiple bearings (212) are located around shank (21), the multiple bearings (212) and the shank (21) are located in the spindle (20).

9. The feed control device for a drill press as claimed in claim 8, wherein the driving unit (3) includes an active wheel (33) and a passive wheel (34), the belt (32) is connected between the active wheel (33) and the passive wheel (34), the active wheel (33) is connected to an output shaft of the motor (31), the passive wheel (34) includes a mount part (341) which is connected to the keyway section (211) of the shank (21) of the spindle unit (2), the motor (31) drives the active wheel (33) so as to drive the passive wheel (34) via the belt (32).

10. The feed control device for a drill press as claimed in claim 1, wherein the shaft (41) of the feed unit (4) includes the gear (412) connected to a middle of the shaft (41), two ends of the shaft (41) extend beyond the case (1).

## Amended claims

### Amended claims in accordance with Rule 137(2) EPC.

1. A feed control device for a drill press, comprising:
a case (1) having a top cover (11) mounted to a top of the case (1);
a spindle unit (2) extending perpendicularly through a front end of the case (1) and including a shank (21) and a spindle (20), the spindle (20) including a toothed portion (22) formed to an outer periphery thereof, a depth detection unit (23) located beside the toothed portion (22);
a driving unit (3) located at a rear end of the case (1) and including a motor (31) and a belt (32), the belt (32) connected between the motor (31) and the shank (21);
a feed unit (4) including a gear (412), a shaft (41) and a feed handle (42), the shaft (41) extending horizontally through the case (1) and being perpendicular to the toothed portion, the feed handle (42) connected to a left end or a right end of the shaft (41) of the feed unit (4), and
a control unit (5) electrically connected to the motor (31) and the depth detection unit (23),
**characterized in that** the gear (412) of the feed unit (4) rotates an angle of 160 degrees from an initial position to complete a machining process of the spindle unit (2).

2. The feed control device for a drill press as claimed in claim 1, wherein the gear (412) of the feed unit (4) includes 55 teeth, a pitch diameter of 110 and a gear module of 2.

3. The feed control device for a drill press as claimed in claim 1, wherein a ratio of the angle of the feed handle (42) of the spindle unit (2) relative to a distance that the spindle unit (2) moves is 1:0.83 to 1:0.93.

4. The feed control device for a drill press as claimed in claim 1, wherein the case (1) includes a front cover (12) and a display panel (121) which is connected to an outside of the front cover (12), the front cover (12) connected to the case (1) and a front end of the top cover (11), the control panel (121) is electrically connected to the control unit (5).

5. The feed control device for a drill press as claimed in claim 5, wherein the control panel (121) displays a speed of the motor (31), a load of the motor (31), and a speed of the spindle unit (2).

6. The feed control device for a drill press as claimed in claim 1, wherein the case (1) includes a first room (13) and a second room (14) respective formed in the front end and the rear end of the case (1), the spindle unit (2) and the feed unit (4) are located in the first room (13), the driving unit (3) and the control unit (5) are located in the second room (14).

7. The feed control device for a drill press as claimed in claim 1, wherein the shank (21) of the spindle unit (2) includes a keyway section (211) at a distal end thereof, multiple bearings (212) are located around shank (21), the multiple bearings (212) and the shank (21) are located in the spindle (20).

8. The feed control device for a drill press as claimed in claim 8, wherein the driving unit (3) includes an active wheel (33) and a passive wheel (34), the belt (32) is connected between the active wheel (33) and the passive wheel (34), the active wheel (33) is connected to an output shaft of the motor (31), the passive wheel (34) includes a mount part (341) which is connected to the keyway section (211) of the shank (21) of the spindle unit (2), the motor (31) drives the active wheel (33) so as to drive the passive wheel (34) via the belt (32).

9. The feed control device for a drill press as claimed in claim 1, wherein the shaft (41) of the feed unit (4) includes the gear (412) connected to a middle of the shaft (41), two ends of the shaft (41) extend beyond the case (1).
